Europäisches Patentamt

European Patent Office

Office européen des brevets

(19)

(11) Veröffentlichungsnummer: **0 121 045**

**A1**

(12) **EUROPÄISCHE PATENTANMELDUNG**

(21) Anmeldenummer: **84100902.0**

(22) Anmeldetag: **28.01.84**

(51) Int. Cl.³: **A 01 C 7/20**
**A 01 C 7/08**

(30) Priorität: **04.03.83 DE 3307709**

(43) Veröffentlichungstag der Anmeldung:
**10.10.84 Patentblatt 84/41**

(84) Benannte Vertragsstaaten:
**AT BE CH DE FR GB LI NL SE**

(71) Anmelder: **ACCORD Landmaschinen Heinrich Weiste &**
**Co. GmbH**
**Coesterweg 42**
**D-4770 Soest(DE)**

(72) Erfinder: **Weiste, Helmut, Dipl.-Ing.**
**Auf der Breite 22**
**D-4772 Bad Sassendorf(DE)**

(74) Vertreter: **Habbel, Hans-Georg, Dipl.-Ing.**
**Postfach 3429 Am Kanonengraben 11**
**D-4400 Münster(DE)**

(54) Säschiene.

(57) Die Erfindung schlägt eine Säschiene zum Ausbringen von Saatgut unter eine angehobene Erdschicht, die noch mit Pflanzen und/oder Pflanzenresten durchsetzt ist, vor, wobei die Säschiene (2) als Hohlschiene ausgebildet ist, an ihrer Oberseite in Abstand voneinander angeordnete Saatgutzuführungsrohre (5) aufweist und unterhalb der Mündung der Saatgutzuführungsrohre in der Hohlschiene eine Prallplatte (4) vorgesehen ist, die in einem Winkel β gegenüber der Achse der Saatgutzuführungsrohre (5) geneigt ist.

Fig. 1

EP 0 121 045 A1

- 1 -

"Säschiene"

Die Erfindung bezieht sich auf eine Säschiene zum Ausbringen von Saatgut entsprechend dem Oberbegriff des Hauptanspruches.

In der gattungsbildenden DE-OS 3o 28 382 wird ein Verfahren und eine Vorrichtung beschrieben, der die Aufgabe zugrundeliegt, auch mit großen Mengen Pflanzen bestandene Ackerböden in einem Arbeitsgang saatfertig herzurichten, das Saatgut auszubringen und dieses mit einem Gemisch aus Feinerde und den vorher die Oberfläche des Feldes bedeckenden Pflanzen bzw. Pflanzenrückständen gleichmäßig zu bedecken, so daß die keimenden und heranwachsenden Pflanzen, z.B. Getreide, durch diese Mulchschicht hindurchwachsen können.

Die bekannte Vorrichtung arbeitet dabei mit einer Säschiene, die im wesentlichen rahmenförmig ausgebildet ist und in der ein Ringförderer angeordnet ist, wobei an dem bodenseitigen Querteil des Rahmens die Säöffnungen oder Säorgane angeordnet sind und der Ringförderer als Saatgutrückführungsvorrichtung wirkt, um von der eigentlichen Säschiene nichtverbrauchtes Saatgut zurückzuführen.

- 2 -

Durch den freien Raum des Rahmens soll die von dem Bodenbearbeitungsgerät aufgenommene Erde zusammen mit den Pflanzen hindurchgeführt werden, wobei dieser Durchgang sich anschließend auf die abgelegten Saatkörner auflegt.

Die bekannte Vorrichtung ist aufgrund des Ringförderers kostenaufwendig und kompliziert ausgebildet und daher für den rauhen landwirtschaftlichen Betrieb schlecht geeignet, insbesondere wenn berücksichtigt wird, daß diese Vorrichtung nur relativ kurze Zeit eingesetzt wird, dann über einen längeren Zeitraum stillsteht und nicht benutzt wird und hiermit großen Korrosionserscheinungen ausgesetzt ist.

Aus der DE-OS 31 3o 91o ist ein Breitsaatverfahren bekannt, das mit einer Vielzahl zueinander auf Lücke und hintereinander versetzt angeordneter Säschare arbeitet. Diese Vielzahl einzelner in den Boden eingreifender Arbeitselemente machen den Einsatz einer solchen Vorrichtung bei mit Pflanzen und Pflanzenresten bestandenen Böden schwierig, da die Gefahr der Verstopfung der Scharzwischenräume mit Pflanzenrückständen usw. erheblich ist.

Schließlich ist es aus der DE-PS 3o 34 41o bei einem Breitsäschar bekannt, den Scharraum unterhalb der Mündung des Zuführungsrohres für das Saatgut mit einem ebenen Prallblech auszurüsten, das für die Verteilung des zentrisch zugeführten Saatgutes in einem aber kleinen und seitlich begrenzten Scharraum Sorge trägt.

Der Erfindung liegt die Aufgabe zugrunde, eine Vorrichtung zur Durchführung des in der gattungsbildenden DE-OS 3o 28 382 beschriebenen Verfahrens
zu schaffen, deren Säschiene möglichst einfach
ausgebildet ist, kostengünstig hergestellt werden
kann, zu einem sicheren Ablegen des Saatgutes
führt und für eine gute gleichmäßige Verteilung des
Saatgutes über die Breite der Säschiene Sorge trägt.

Diese der Erfindung zugrundeliegende Aufgabe wird
durch die Merkmale des kennzeichnenden Teiles des
Hauptanspruches gelöst.

Vorteilhafte Ausgestaltungen sind in den Unteransprüchen erläutert.

Gemäß der Erfindung wird eine als Hohlschiene ausgebildete Säschiene vorgeschlagen, in der eine sich
über die gesamte Länge erstreckende Prallplatte
vorgesehen ist, die unterhalb der Mündungen der in
großem Abstand voneinander angeordneten Saatgutzuführungsrohre liegt. Der Abstand der Saatgutzuführungsrohre liegt etwa bei dem Vierfachen der
üblichen Reihenweite. Die Hohlschiene ist dabei
über ihre ganze Länge als freier Raum ausgebildet
und durch die besondere Formgebung bewirkt die
Prallplatte eine gleichmäßige Verteilung des durch
die Saatgutzuführungsrohre zugeführten Saatgutes
über die gesamte Breite und führt zu einer gleichmäßigen Ablage des Saatgutes hinter der Austrittsöffnung der eigentlichen Säschiene.

Vorzugsweise ist dabei diese Austrittsöffnung der
Säschiene durch eine an sich bekannte, aus elastischem Werkstoff bestehende Abdeckschürze abgeschlossen, die mit ihrem freien Ende auf der von dem

- 4 -

Bodenbearbeitungsgerät gebildeten Oberfläche aufliegt und durch ihre reibende und kratzende Wirkung
zu einer weiteren Feinverteilung des Saatgutes und
zu einem leichten Einpressen des Saatgutes in den
Boden führt.

Ein Ausführungsbeispiel der Erfindung wird nachfolgend anhand der Zeichnungen erläutert. Die
Zeichnungen zeigen dabei in

Fig. 1          eine Schnittdarstellung der Sä-
                schiene mit einem Teil des Boden-
                bearbeitungsgerätes und in

Fig. 2          eine schaubildliche Darstellung
                der Säschiene, um den großen Abstand der Saatgutzuführungsrohre
                voneinander zu verdeutlichen.

In den Zeichnungen ist mit 1 ein Bodenbearbeitungsgerät, beispielsweise eine Fräse bezeichnet, die
die obere Schicht des Bodens zusammen mit den aufstehenden Pflanzen oder aufliegenden Pflanzenresten losfräst und nach hinten wegfördert und
wieder auf den Boden ablegt. Bei 2 ist eine Säschiene dargestellt, die sich unmittelbar an das
Bodenbearbeitungsgerät anschließt und mit einem
keilförmig zulaufenden vorderen schuhartigen Teil 3
fast unter das Bodenbearbeitungsgerät greift. Die
Säschiene 2 ist dabei als Hohlschiene ausgebildet
und erstreckt sich über eine große Breite.

Der in der Säschiene 2 gebildete Hohlraum wird
durch eine Prallplatte 4 unterteilt, so daß der vordere schuhartige Teil ein reiner Hohlraum oder
Hohlkörper ist. Während der in Fahrtrichtung ge-

sehen hinter der Prallplatte 4 liegende Teil als Saatgutverteilungsvorrichtung gestaltet ist.

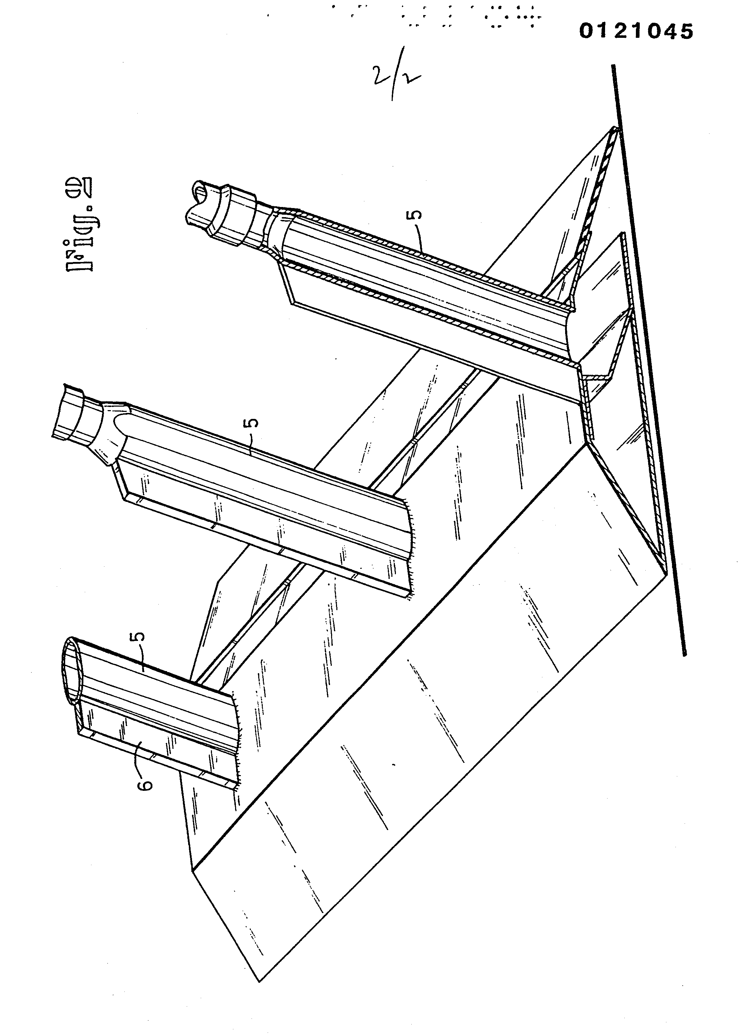

Die Säschiene 2 trägt Saatgutzuführungsrohre 5, von denen in Fig. 2 drei Rohre dargestellt sind. Aus der Darstellung in Fig. 2 ist erkennbar, daß die Rohre oval im Querschnitt ausgebildet sind, wobei die Längsachse des Ovals nach vorne in Fahrtrichtung gerichtet ist. Vor jedem Rohr ist ein Gutteiler 6 angeordnet. Sowohl durch die Gestaltung der Rohre in ihrer Form als auch durch den Gutteiler, wird eine gute Führung des abgefrästen Gutes über die Säschiene 2 hinweg erreicht.

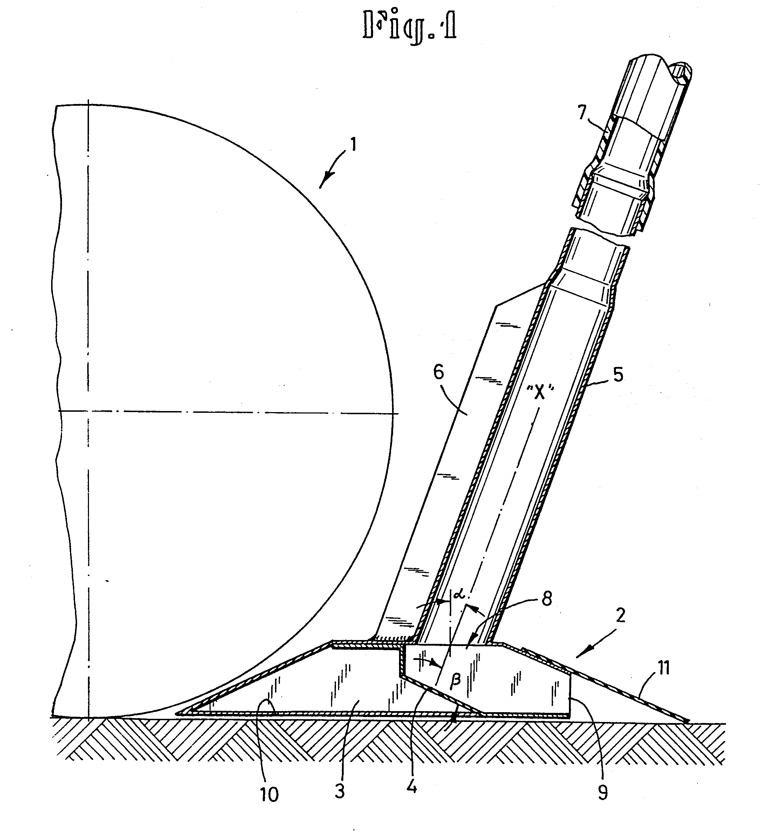

In Fig. 1 sind die üblicherweise aus Kunststoff bestehenden schlauchförmigen Verbindungsleitungen 7 erkennbar, die an das obere Ende des Saatgutzuführungsrohres 5 anschließen und zu einem in der Zeichnung nicht dargestellten Saatgutvorratsbehälter führen.

In Fig. 1 ist weiterhin die Mittelachse des Saatgutzuführungsrohres 5 eingezeichnet, und es ist erkennbar, daß diese Achse (in der Zeichnung mit X bezeichnet) mit einem Winkel $\alpha$ von etwa $20^\circ$ gegenüber der Senkrechten nach hinten geneigt ist.

Unterhalb des offenen Endes 8 jedes Saatgutzuführungsrohres 5 ist die Prallplatte 4 vorgesehen, das aber über die gesamte Länge der Säschiene 2 reicht, wobei diese Prallplatte 4 gegenüber der Achse X hinsichtlich seiner Neigung einen Winkel $\beta$ von etwa $95^\circ$ aufweist.

Die Prallplatte geht - wie dies besonders deutlich

- 6 -

die Zeichnungen zeigen - in die Bodenplatte über, so daß in Richtung der Saatgutaustrittsöffnung 9 der Säschiene gesehen sich ein ebener Teil der Säschiene an die geneigte Prallplatte anschließt. Die Saatgutaustrittsöffnung 9 wird von einer Abdeckschürze 11 übergriffen, die aus einem elastischen Werkstoff, wie beispielsweise Kunststoff oder Gummi, besteht und die mit ihrem freien Ende auf der Sohle aufliegt, die von dem Bodenbearbeitungsgerät geschaffen wurde. Die eigentliche Bodenplatte der Säschiene ist bei 1o erkennbar.

In überraschender Weise wurde festgestellt, daß bei einer solchen Anordnung eine vorzügliche gleichmäßige Verteilung des Saatgutes über die Länge der Säschiene erreicht wird, wobei offensichtlich der Winkel $\beta$ hier von ausschlaggebender Bedeutung ist. Auch die Tatsache, daß die Prallplatte nicht unmittelbar mit ihrer Neigung an die Saatgutaustrittsöffnung 9 anschließt, ist von Bedeutung, denn offensichtlich erfolgt in dem sich anschließenden ebenen Teil der Bodenplatte 1o, d.h. dem Bodenplattenteil, das zwischen dem Ende der Prallplatte 4 und der Saatgutaustrittsöffnung 9 vorhanden ist, eine weitere Umverteilung des Saatgutes, die dazu führt, daß das endgültig aus der Saatgutaustrittsöffnung 9 austretende Saatgut ein gleichmäßiges Säbild schafft.

Patentansprüche:

1.  Vorrichtung zum Ausbringen von Saatgut auf mit lebenden Pflanzen und/oder Pflanzenresten bedeckten Böden, die die Pflanzen bzw. die Pflanzenreste einschließlich der darunterliegenden Bodenschicht aufnimmt, über eine Säschiene hinwegführt und hinter der Säschiene ablegt, dadurch gekennzeichnet, daß die Säschiene (2) als sich über die Breite der Arbeitsmaschine erstreckende Hohlschiene mit auf ihrer Oberseite in einem mindestens dem Dreifachen der üblichen Reihenweite entsprechenden Abstand voneinander angeordneten Saatgutzuführungsrohren (5) ausgebildet ist und in dem Hohlraum der Säschiene (2) der Mündung (8) der Saatgutzuführungsrohre (5) gegenüberliegend eine über die ganze Länge der Säschiene reichende Prallplatte (4) vorgesehen ist, wobei die in Fahrtrichtung gesehen rückwärtsliegende, über die ganze Länge der Säschiene reichende Saatgutaustrittsöffnung (9) der Säschiene (2) durch eine elastische Abdeckschürze abgedeckt ist.

2.  Säschiene nach Anspruch 1, dadurch gekennzeichnet, daß in Fahrtrichtung gesehen das vordere Teil der Säschiene (2) schuhartig (3) ausgebildet ist und bis unter die die Pflanzen und Pflanzenreste sowie den Boden ergreifende Arbeitsvorrichtung (1) greift.

3. Säschiene nach Anspruch 1 und 2, <u>dadurch gekennzeichnet</u>, daß die Prallplatte (4) innerhalb des Hohlraumes der Säschiene (2) diesen Hohlraum unterteilend angeordnet ist und den mit Saatgut beschickten Teil der Säschiene (2) von dem schuhartigen Vorderteil der Säschiene (2) abtrennt.

4. Säschiene zumindest nach Anspruch 1, <u>dadurch gekennzeichnet</u>, daß die Achse (X) des Saatgutzuführungsrohres mit einem Winkel $\alpha$ von etwa 20° gegenüber der Senkrechten nach hinten geneigt ist.

5. Säschiene zumindest nach Anspruch 1, <u>dadurch gekennzeichnet</u>, daß die von der Mündung (8) des Saatgutzuführungsrohres (5) innerhalb der Säschiene (1) angeordnete Prallplatte (4) gegenüber der Achse des Saatgutzuführungsrohres mit einem Winkel $\beta$ von etwa 95° geneigt ist.

6. Säschiene zumindest nach Anspruch 1 und 5, <u>dadurch gekennzeichnet</u>, daß die Prallplatte (4) in die Bodenplatte (1o) der Säschiene (2) übergeht, und zwar - in Arbeitsrichtung der Maschine gesehen - im Abstand von der eigentlichen Saatgutaustrittsöffnung (9).

7. Säschiene zumindest nach Anspruch 1, <u>dadurch gekennzeichnet</u>, daß die Saatgutzuführungsrohre (5) im Querschnitt oval ausgebildet sind und mit ihrer Längsachse in

- 3 -

Fahrtrichtung ausgerichtet sind.

8.      Säschiene zumindest nach Anspruch 1
und 7, dadurch gekennzeichnet, daß in
Arbeitsrichtung gesehen die Saatgutzuführungsrohre (5) an ihrer Vorderseite mit einem Gutteiler (6) ausgerüstet sind.

Fig. 1

Fig. 5

**Europäisches Patentamt**

**EUROPÄISCHER RECHERCHENBERICHT**

**0121045**
Nummer der Anmeldung

EP 84 10 0902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 895 589 (T.H. GARNER et al.) <br> * Ansprüche 1-7, 10; Spalte 1, Zeilen 46-60; Spalte 2, Zeile 33 - Spalte 3, Zeile 32; Figuren 1-3 * | 1,2,4, 8 | A 01 C 7/20 <br> A 01 C 7/08 |
| | --- | | |
| D,A | DE-C-3 034 410 (ACCORD LANDMASCHINEN H. WEISTE) <br> * Anspruch 1; Spalte 2, Zeile 67 - Spalte 4, Zeile 10; Figuren 1, 2 * | 1-5,7, 8 | |
| | --- | | |
| D,A | DE-A-3 028 382 (E. WEICHEL) <br> * Anspruch 14; Seite 11, Zeile 15 - Seite 12, Zeile 23; Figuren 1, 3, 4, 6, 7 * | 1,2 | |
| | ----- | | RECHERCHIERTE SACHGEBIETE (Int. Cl. ³) |
| | | | A 01 C 5/06 <br> A 01 C 7/00 |

Der vorliegende Recherchenbericht wurde für alle Patentansprüche erstellt.

| Recherchenort <br> BERLIN | Abschlußdatum der Recherche <br> 18-05-1984 | Prüfer <br> BERGZOLL M C |
|---|---|---|